**Europäisches Patentamt**

**European Patent Office**

**Office européen des brevets**

(19)

(11) Veröffentlichungsnummer: **0 183 737**
**B1**

(12)

# EUROPÄISCHE PATENTSCHRIFT

(45) Veröffentlichungstag der Patentschrift:
**07.12.88**

(21) Anmeldenummer: **85902468.9**

(22) Anmeldetag: **23.05.85**

(86) Internationale Anmeldenummer:
**PCT/DE 85/00175**

(87) Internationale Veröffentlichungsnummer:
**WO 85/05587 (19.12.85** Gazette 85/27)

(51) Int. Cl.⁴: **B 23 Q 27/00**

(54) **VORRICHTUNG ZUM HERSTELLEN VON WERKSTÜCKEN MIT POLYGONER AUSSEN- UND/ODER INNENFORM.**

(30) Priorität: **01.06.84 DE 3420504**

(43) Veröffentlichungstag der Anmeldung:
**11.06.86 Patentblatt 86/24**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**EP-A- 0 097 346**
**WO-A-85/00545**

(73) Patentinhaber: **RAMBOW, Peter, Wirtsgasse 32,
D-5000 Köln 60 (DE)**

(72) Erfinder: **RAMBOW, Peter, Wirtsgasse 32,
D-5000 Köln 60 (DE)**

(74) Vertreter: **Berkenfeld, Helmut, Dipl.-Ing., An der
Schanz 2, D-5000 Köln 60 (DE)**

## Beschreibung

Die Erfindung betrifft eine Vorrichtung zum Herstellen von Werkstücken mit polygoner Aussen- und/oder Innenform mit einem Maschinenbett, mit einer Spindel mit einem Spannfutter für das Werkstück, mit einem gegenüber dem Maschinenbett längs- und querverschiebbar geführten Halter für den Werkzeugträger, mit einer ersten und einer zweiten Welle, die über ein Wechselgetriebe gemeinsam und damit synchronisiert an den gleichen Antriebsmotor wie die Spindel angeschlossen sind, wobei der Halter über ein fest einstellbares radiales Verschiebeelement mit der ersten Welle verbunden und der Werkzeugträger exzentrisch am Halter befestigt und über ein radiales Verschiebeelement antriebsmässig mit der zweiten Welle verbunden ist.

Vorrichtungen zum Herstellen von rotationssymmetrischen Teilen sind als Drehbänke bekannt. Die Technik verlangt jedoch auch Werkstücke, die nicht rotationssymmetrisch sind, sondern polygone Aussen- und/oder Innenform aufweisen. Zum Herstellen solcher Werkstücke ist aus der DE-OS 2 355 036 ein Verfahren bekannt, bei dem das zu bearbeitende Werkstück um eine ortsfeste Achse mit konstanter Geschwindigkeit rotiert, während sich das Werkzeug in bezug auf das Werkstück auf einer Ellipsenbahn bewegt. Durch die Überlagerung der Drehbewegung des Werkstückes und der Bewegung des eine Ellipsenbahn durchlaufenden Werkzeugs lassen sich Polygonformen, auch solche mit teilweise scharf ausgezogenen Ecken, erzeugen. Dieses bekannte Verfahren ist mit dem Nachteil einer geringen Arbeitsgeschwindigkeit behaftet. Dies ergibt sich daraus, dass die Getriebe zum Erzeugen der elliptischen Bewegung des Werkzeuges nur eine begrenzte Drehzahl zulassen. Ein weiterer Nachteil dieses bekannten Verfahrens liegt darin, dass das zur Erzeugung des Bewegungsgesetzes verwandte Getriebe verhältnismässig gross gebaut werden muss. Diese Nachteile sollen mit einer Vorrichtung der eingangs genannten Gattung vermieden werden, wie sie aus der EP-A-97 346 bekannt ist. Bei dieser bekannten Vorrichtung sind die beiden Wellen räumlich getrennt angeordnet. Dadurch erhält die Vorrichtung eine grosse Baulänge. Der Halter für den Werkzeugträger ist nur mit einer der beiden Wellen verbunden. Damit kann auch nur die Bewegung dieser einen Welle in ihn eingeleitet werden. Dies begrenzt die Polygonform des herzustellenden Werkstückes. Hiervon ausgehend stellt sich für die Erfindung die Aufgabe, die Vorrichtung so auszubilden, dass sie kürzer gebaut und Polygone unterschiedlicher Form und auch mit scharfen Kanten einwandfrei hergestellt werden können.

Bei einer Vorrichtung der eingangs genannten Gattung ergibt sich die Lösung für diese Aufgabe nach der Erfindung dadurch, dass die beiden Wellen parallel zueinander bis zum Halter geführt sind und diesen halten und im Halter eine Lagerung für den Werkzeugträger untergebracht ist. Die beiden Wellen sind somit raumsparend parallel zueinander geführt und greifen beide am Halter des Werkzeugträgers an. Damit können ihre Bewegungen unmittelbar in diesen eingeleitet werden. Wie bekannt sind bei der erfindungsgemässen Vorrichtung zwei Wellen vorgesehen. An der ersten Welle ist über ein radiales Verschiebeelement das Lager des Werkzeugträgers befestigt. Das heisst, dass sich das Lager des Werkzeugträgers mit der ersten Welle und mit der gleichen Drehzahl wie diese dreht. Infolge des radialen Verschiebeelementes verläuft die Bahnkurve des Lagers, damit auch des Werkzeugträgers und damit des Werkzeuges exzentrisch zu der ersten Welle. Gleichzeitig ist der Werkzeugträger exzentrisch am Lager befestigt und antriebsmässig mit der zweiten Welle verbunden. Das heisst, dass er sich zusätzlich entlang einer weiteren Bahnkurve bewegt, die von der Bahnkurve des Lagers verschieden ist, und, da er antriebsmässig mit der zweiten Welle verbunden ist, auch noch eine Eigendrehung durchführt. Damit bewegt sich das am Werkzeugträger gehaltene Werkzeug entlang einer geschlossenen Bahnkurve, die sich aus der Überlagerung der Bahnkurven von Werkzeugträger und Lager ergibt. Gleichzeitig führt das Werkzeug auch noch eine sich aus der Drehung der zweiten Welle ableitende Eigendrehung durch. Das zwischen dem Werkzeugträger und der zweiten Welle vorgesehene radiale Verschiebeelement gleicht dabei Winkeländerungen aus, die sich durch die Drehungen um verschiedene Drehachsen ergeben. Dem Werkzeug wird eine Bahnkurve aufgezwungen, die sich aus einer Überlagerung der Bahnkurven von Lager und Werkzeugträger ergibt. Diese beiden letzteren Bahnkurven sind jeweils Kreisbahnen, die exzentrisch um verschiedene Drehachsen erfolgen. Bei der praktischen Durchführung wirkt es sich als vorteilhaft aus, dass die exzentrisch bewegten Massen klein sind. Im wesentlichen ist dies die Masse des Lagers einschliesslich der Masse des von diesem gehaltenen Werkzeugträgers und Werkzeuges. Das Lager und der Werkzeugträger lassen sich leicht ausbilden. Die Masse des Werkzeuges ist sowieso gering. Die gemeinsame Masse dieser Elemente wird mit dem fest einstellbaren radialen Verschiebeelement exzentrisch an der ersten Welle gehalten. Da diese gemeinsame Masse verhältnismässig niedrig ist, ist auch die durch ihre exzentrische Bewegung in die Vorrichtung eingebrachte Unwucht gering. Die Praxis hat gezeigt, dass diese Unwucht ohne besondere Massnahmen aufgefangen werden kann. An dieser Stelle sei schon bemerkt, dass das Werkzeug durch die Längs- und Querverschiebbarkeit der Halterung gegenüber dem Werkstück verstellt und damit seine Bahnkurve gegenüber der Drehachse des Werkstückes fixiert wird. Die Längsverschiebbarkeit der Halterung entlang des Maschinenbettes hat dabei geringen Einfluss. Sie bestimmt lediglich, an welcher Stelle des Werkstückes das Werkzeug angreift. Entscheidend ist die Querverschiebbarkeit. Hierdurch wird die Exzentrizität der Bahnkurve des Werkzeuges gegenüber der Drehachse des Werkstückes bestimmt. In der Praxis wird man die Halterung nur vertikal gegenüber dem Maschinenbett, das heisst nach oben oder unten, verschieben. Ebenso und mit dem gleichen praktischen Ergebnis könnte die Halterung aber auch senkrecht zur Längsachse des Maschinenbettes verschoben werden.

An dieser Stelle sei weiter noch bemerkt, dass das Wechselgetriebe im allgemeinen ein Zahnradgetriebe mit auswechselbaren Zahnrädern ist. Im Rahmen dieser Erfindung fallen jedoch auch ein Schaltgetriebe, ein Getriebe mit Zahnketten und jegliches Getriebe unter den Begriff Wechselgetriebe, das einen Antrieb mit einstellbarer Übersetzung zulässt.

In einer zweckmässigen Ausgestaltung ist vorgesehen, dass der Halter als ein Gehäuse radial verschiebbar an der ersten Welle befestigt und in ihm eine Scheibe drehbar gelagert ist, der Werkzeugträger exzentrisch an der Scheibe angeordnet und diese über das radiale Verschiebeelement antriebsmässig mit der zweiten Welle verbunden ist. Dieses Gehäuse bildet das eigentliche Lager für den Werkzeugträger. Es kann klein und leicht ausgeführt werden. Seine Aufgabe liegt darin, ausschliesslich den Werkzeugträger und die Einrichtungen zu dessen Antrieb zutragen. Erfindungsgemäss ist das Gehäuse radial verschiebbar an der ersten Welle befestigt. Diese radiale Verschiebung des Gehäuses gegenüber der ersten Welle wird zu Beginn eines Betriebsablaufes eingestellt und dann beibehalten. Sie ist verhältnismässig gering und führt damit zu einer nur geringen Unwucht.

Wegen der geringen Unwucht kann mit hohen absoluten Drehzahlen des Gehäuses und des Werkzeugträgers und damit auch der das Werkstück antreibenden Spindel gearbeitet werden. Damit ergibt sich auch eine grosse Differenz zwischen der Drehzahl des Werkzeugträgers auf der einen und des Werkstückes auf der anderen Seite. Diese Differenz bestimmt die Schneidleistung. Erfindungsgemäss lässt sich damit eine hohe Schneidleistung erzielen.

In einer zweckmässigen Weiterbildung ist vorgesehen, dass in dem als Gehäuse ausgebildeten Halter ein Zahnradgetriebe gelagert und dieses auf seiner Antriebsseite mit der zweiten Welle und auf seiner Abtriebsseite mit der Scheibe verbunden ist. Mit diesem Getriebe, dessen Zahnräder auswechselbar sind, werden die Drehzahlen der Scheibe und damit des Werkzeugträgers festgelegt. In konstruktiver Ausgestaltung des Gehäuses ist vorgesehen, dass die Scheibe ein Hohlrad ist, das auf seiner Innenwand mit der Abtriebsseite des Zahnradgetriebes kämmt.

Es wurde ausgeführt, dass die erste Welle das das Lager des Werkzeugträgers bildende Gehäuse in Drehung versetzt, während die zweite Welle den Werkzeugträger selbst in Drehung versetzt. Für die Lagerung und die gegenseitige Anordnung dieser beiden Wellen ist in einer zweckmässigen Ausgestaltung vorgesehen, dass die erste Welle eine Hohlwelle ist und die zweite Welle in dieser gelagert ist, das der als Gehäuse ausgebildete Halter in seiner an der ersten Welle befestigten Seite zentrisch eine Öffnung aufweist, von der Antriebsseite des Zahnradgetriebes ausgehend eine Welle durch diese Öffnung durchgeführt und über das radiale Verschiebeelement mit der zweiten Welle verbunden ist. Durch die Anordnung und Lagerung der zweiten Welle in der ersten Welle ergibt sich eine wenig Raum beanspruchende Konstruktion. Gleichzeitig kann die Drehbewegung der zweiten Welle einfach in das Gehäuse eingeleitet werden.

Es wurde bereits ausgeführt, dass das in diesem Gehäuse angeordnete Zahnradgetriebe auswechselbare Zahnräder enthält. In einer weiteren zweckmässigen Ausgestaltung ist vorgesehen, dass auch das an den Antreibsmotor angeschlossene Wechselgetriebe zum Antrieb der ersten und der zweiten Welle für beide Wellen zum Ändern von deren Drehzahlen auswechselbare Zahnräder enthält. Somit lässt sich nicht nur die Drehzahl des Werkzeugträgers gegenüber der zweiten Welle, sondern auch die Drehzahlen der beiden Wellen untereinander verstellen. Die Änderung des letzten Drehzahlverhältnisses bestimmt dann das Verhältnis der Drehzahl des Werkzeugträgers gegenüber dem ihn haltenden Gehäuse.

Bei der eben beschriebenen Ausführungsform sind die erste und die zweite Welle über das Zahnradgetriebe unmittelbar an den Antriebsmotor angeschlossen. Erfindungsgemäss ist eine weitere Ausführungsform vorgesehen, bei der das in dem Gehäuse enthaltene und zum Antrieb des Werkzeugträgers vorgesehene Zahnradgetriebe auf seiner Antriebsseite vom Antrieb gelöst und hierzu die zweite Welle an einem Support auf dem Maschinenbett fixiert ist und das Zahnradgetriebe auf seiner Abtriebsseite zwei miteinander kämmende und auf Achsen exzentrisch an der Innenwand des als Gehäuse ausgebildeten Halters gelagerte Zahnräder aufweist. Ähnlich wie bei einem Planetengetriebe folgen diese Zahnräder der durch die erste Welle hervorgerufenen Drehung des Gehäuses. Wie bisher übertragen sie ihre Eigendrehung auf das den Werkzeugträger haltende Hohlrad. Bei dieser Ausführungsform kann damit das Zahnradgetriebe zwischen der zweiten Welle und dem Antriebsmotor entfallen. Das Zahnradgetriebe für die erste Welle wird im allgemeinen so ausgelegt, dass diese mit der doppelten Drehzahl wie das Hohlrad, jedoch mit gleicher Drehrichtung umläuft. Es entfällt jedoch jegliche Drehung der zweiten Welle und des mit deren Abtriebsende verbundenen und im Gehäuse angeordneten Zahnrades. Dieses bildet das Sonnenrad des im Gehäuse angeordneten Getriebes.

Bei einer weiteren zweckmässigen Ausgestaltung ist vorgesehen, dass die zweite Welle über ein Getriebe mit Drehzahlerhöhung und ohne Umkehr der Drehrichtung an den Antriebsmotor angeschlossen ist und das Zahnradgetriebe auf seiner Abtriebsseite zwei miteinander kämmende und auf Achsen exzentrisch an der Innenwand des als Gehäuse ausgebildeten Halters gelagerte Zahnräder aufweist. Bei dieser Ausführungsform drehen sich das Gehäuse und das Hohlrad in entgegengesetzten Richtungen. Das Werkzeug und das Werkstück drehen sich jedoch in der gleichen Richtung. Bei einer höheren Drehzahl des Werkzeuges lassen sich dann bestimmte Konturen erreichen.

Bei dieser Ausführungsform hat es sich als zweckmässig herausgestellt, wenn die erste Welle über ein Getriebe mit Umkehr der Drehrichtung an den Antriebsmotor angeschlossen ist.

Bei den bisher beschriebenen Ausführungsformen war die erste Welle hohl ausgebildet und die zweite Welle in der ersten Welle gelagert. Die Erfindung sieht aber noch eine zweckmässige Ausführungsform vor, bei der die erste Welle und die zweite Welle nebeneinander gelagert sind, an der ersten Welle über ein fest einstellbares radiales Verschiebeelement ein Lager befestigt, an diesem ein erstes Zahnrad drehbar gelagert und an diesem der Werkzeugträger exzentrisch zu dem Lager befestigt und an der zweiten Welle über ein fest einstellbares radiales Verschiebeelement ein weiteres Zahnrad befestigt ist, das mit dem ersten Zahnrad kämmt. Bei dieser Ausführungsform entfallen das Gehäuse und das in diesem angeordnete Zahnradgetriebe. Der Werkzeugträger ist unmittelbar auf dem von der ersten Welle angetriebenen ersten Zahnrad befestigt. Dieses erste Zahnrad wird von einem von der zweiten Welle angetriebenen weiteren Zahnrad in Drehung versetzt.

In einer Weiterbildung dieser Ausführungsform ist vorgesehen, dass die erste Welle und die zweite Welle an ihrer Antriebsseite zwei miteinander kämmende Zahnräder tragen und eins dieser Zahnräder an den Antrieb angeschlossen ist. Dies führt dazu, dass sich die erste und die zweite Welle entgegengesetzt zueinander drehen. Damit dreht sich das den Werkzeugträger haltende erste Zahnrad gleichsinnig mit der es haltenden ersten Welle. Damit drehen sich wieder das Werkzeug und das Werkstück in der gleichen Richtung. Die Drehzahl des Werkzeuges wird höher als die Drehzahl des Werkstückes eingestellt. Damit lassen sich wieder bestimmte Konturen erzielen.

In einer Weiterbildung ist vorgesehen, dass die an der Antriebsseite der beiden Wellen vorgesehenen Zahnräder über ein weiteres Zahnrad miteinander kämmen. Auch damit lassen sich wieder bestimmte Konturen erreichen.

In einer Weiterbildung ist vorgesehen, dass die erste Welle eine Hohlwelle ist und das an dieser befestigte Lager eine Mittelöffnung aufweist, deren lichter Durchmesser dem Innendurchmesser der Hohlwelle entspricht. Damit lassen sich sehr lange Werkstücke bearbeiten. Beim Vorschub treten sie in die Hohlwelle ein, so dass das Werkzeug über einer langen Strecke an ihnen vorbeigeführt werden kann.

Eine weitere erfindungsgemässe Ausführungsform fasst die beiden zuletzt erwähnten Ausführungsformen zusammen und zeichnet sich dadurch aus, dass die beiden Zahnräder über ein weiteres Zahnrad miteinander kämmen, die erste Welle eine Hohlwelle ist und das an dieser befestigte Lager eine Mittelöffnung aufweist, deren lichter Durchmesser dem Innendurchmesser der Hohlwelle entspricht.

Am Beispiel der in der Zeichnung gezeigten Ausführungsformen wird die Erfindung nun weiter beschrieben. In der Zeichnung ist:

Fig. 1 eine schematische Seitenansicht einer ersten Ausführungsform,

Fig. 2 eine schematische Seitenansicht einer zweiten Ausführungsform,

Fig. 3 eine schematische Seitenansicht einer dritten Ausführungsform,

Fig. 4 eine schematische Seitenansicht einer vierten Ausführungsform,

Fig. 5 eine schematische Seitenansicht einer fünften Ausführungsform,

Fig. 6 eine schematische Seitenansicht einer sechsten Ausführungsform und

Fig. 7 eine schematische Seitenansicht einer siebten Ausführungsform.

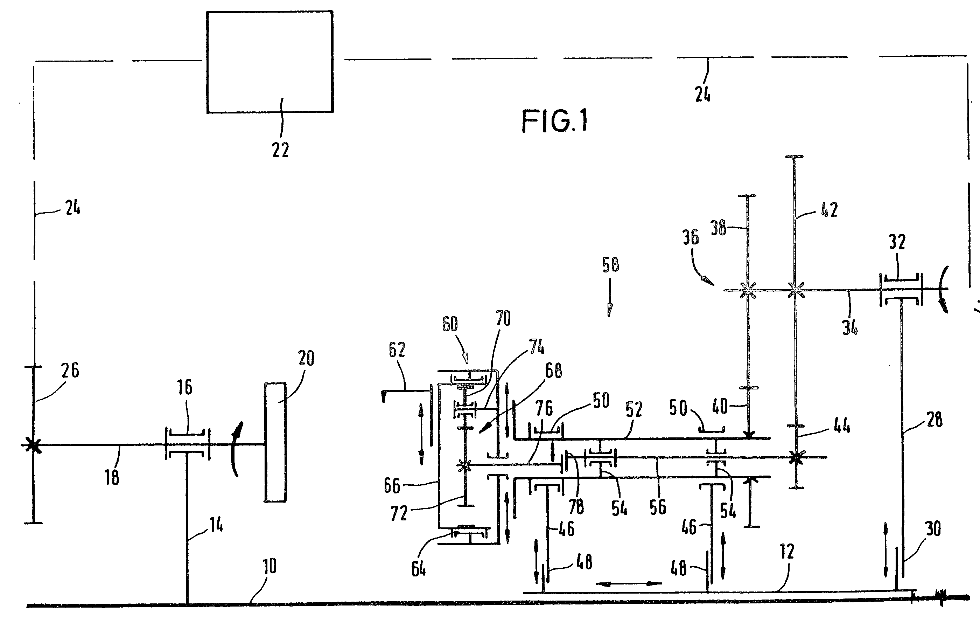

In Fig. 1 wird ein Maschinenbett 10 angedeutet. Auf diesem ist ein Support 12 längsverschiebbar angeordnet. Dies wird durch den Doppelpfeil angezeigt. Es kann sich um das Maschinenbett einer üblichen Drehbank handeln. Im Maschinenbett 12 ist ein Ständer 14 befestigt. Dieser trägt ein Lager 16. In diesem läuft eine Spindel 18, die das Spannfutter 20 für das Werkstück hält. Fig. 1 zeigt weiter einen Antriebsmotor 22. Dieser ist über einen Getriebezug 24 mit einem Getriebe 26 verbunden. Dieses treibt die Spindel 18 an und versetzt damit das Werkstück in Drehung. Rechts zeigt Fig. 1 einen weiteren Ständer 28. Er ist über eine Vertikalführung 30 am Support 12 befestigt. Der Ständer 28 trägt ein Lager 32 für eine Welle 34. Diese ist über einen weiteren Getriebezug 24 an den Antriebsmotor 22 angeschlossen. Die Welle 34 treibt ein Wechselgetriebe 36 an. Dieses enthält die ein Zahnradpaar bildenden Zahnräder 38 und 40 und die ein weiteres Zahnradpaar bildenden Zahnräder 42 und 44. Am Support 12 sind noch weitere Ständer 46 über Führungen 48 befestigt, die eine Verschiebung in der Vertikalen zulassen. Ebenso liegt eine Verschiebung senkrecht zur Zeichenebene im Rahmen der Erfindung. Die beiden Ständer 46 tragen Lager 50.

In diesen ist die erste Welle 52 gelagert. Sie ist als Hohlwelle ausgebildet. In der ersten Welle 52 sind weitere Lager 54 angeordnet. Sie lagern die zweite Welle 56. Beide Wellen werden über das Wechselgetriebe 36 angetrieben. Die beiden Ständer 46 mit den Führungen 48 und die erste und die zweite Welle 52 bzw. 56 bilden insgesamt die Halterung 58 für das Lager des Werkzeugträgers. Dieses ist hier als Gehäuse ausgebildet. Dieses ist allgemein mit 60 bezeichnet. Es ist exzentrisch einstellbar an der ersten Welle 52 befestigt. An seiner Stirnseite ist der Werkzeugträger 62 befestigt. Auf seiner Innenseite weist das Gehäuse 60 ein rundum laufendes Lager 64 auf. In diesem ist die Scheibe 66 drehbar gelagert. Sie ist als Hohlrad ausgebildet. Auf ihrer Vorderseite ist der Werkzeugträger 62 befestigt. Im Gehäuse 60 ist das Zahnradgetriebe 68 angeordnet. Es enthält die Zahnräder 70 und 72. Das Zahnrad 70 läuft auf einer an der Innenwand des Gehäuses 60 befestigten Achse 74. Das Zahnrad 72 ist über eine Welle 76 mit einem radialen Verschiebeelement 78 verbunden. Dieses ist an die zweite Welle 56 angeschlossen. Das Gehäuse 60 lässt sich gegenüber der ersten Welle 52 radial verschieben. Dies wird durch die Doppelpfeile angedeutet Hierbei kann es sich um eine einfache Längsführung handeln. Das radiale Verschiebeelement 78 gleicht die sich durch diese Verschiebung ergebende Versetzung der Welle 76 gegenüber der zweiten Welle 56 aus. Bei dem Verschiebeelement 78 kann es sich zum Beispiel um zwei Kardangelenke handeln. Die Arbeitsweise und ein Betriebsablauf der in Fig. 1 gezeigten Ausführungsform werden weiter unten nach einer Beschreibung der weiteren Ausführungsform erläutert.

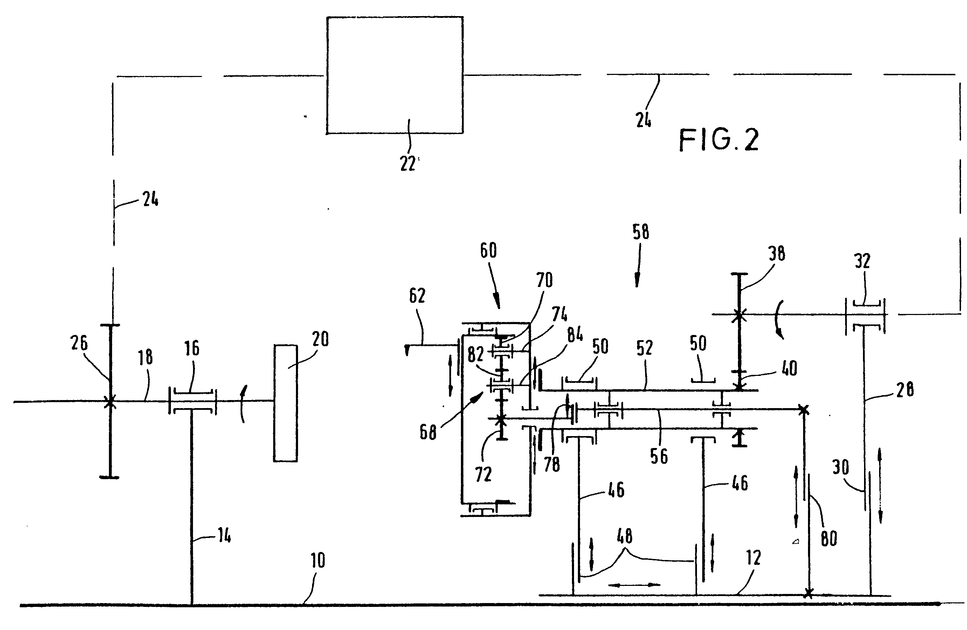

Die in Fig. 2 gezeigte Ausführungsform weicht in einigen Einzelheiten von der Ausführungsform nach Fig. 1 ab. Diese werden im folgenden erläutert. Die zweite Welle 56 ist nicht mehr über das Wechselgetriebe 36 an den Antriebsmotor 22 angeschlossen. Statt dessen ist sie mit einem Festhalter 80 am Support 12 fixiert. Das im Gehäuse 60 angeordnete Getriebe 68 enthält ein weiteres Zahnrad 82. Es läuft auf einer Achse 84, die an der Innenwand des Gehäuses 60 gehalten ist.

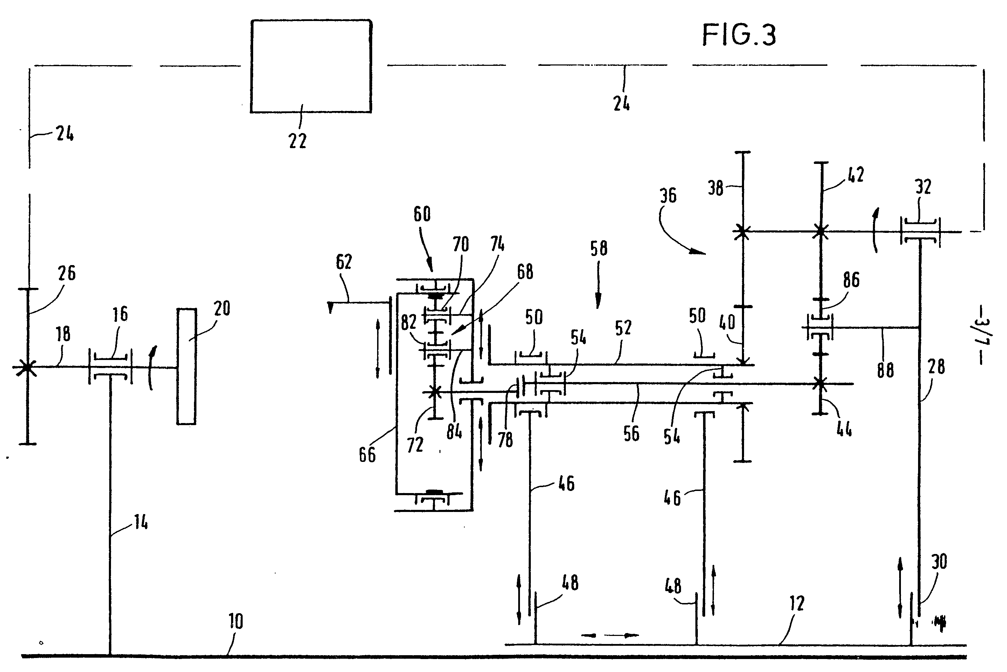

Bei der Ausführungsform nach Fig. 3 entspricht das Getriebe 68 dem nach Fig. 2 und enthält das zusätzliche Zahnrad 82. Die zweite Welle 56 ist jedoch nicht mehr am Support fixiert. Wie bei der Ausführungsform nach Fig. 1 ist sie über Zahnräder 42 und 44 an den Antriebsmotor 22 angeschlossen. Zwischen den beiden Zahnrädern 42 und 44 liegt jedoch ein weiteres Zahnrad 86. Dieses läuft auf einer am Ständer 28 gehaltenen Achse 88. Damit erhält die zweite Welle 56 die gleiche Drehrichtung wie das Zahnrad 42. Entsprechend drehen sich die beiden Wellen 52 und 56 entgegengesetzt zueinander.

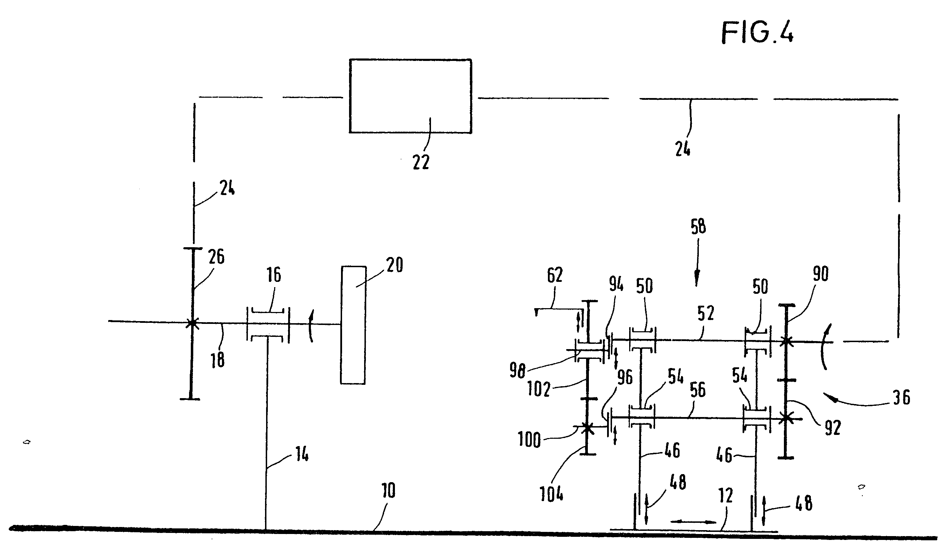

Bei der in Fig. 4 gezeigten Ausführungsform sind die beiden Wellen 52 und 56 nicht mehr koaxial zueinander, sondern nebeneinander angeordnet. An ihren in Fig. 4 rechts liegenden Enden tragen die beiden Wellen 52 und 56 miteinander kämmende Zahnräder 90 und 92. Diese bilden das Wechselgetriebe 36. Eine Welle und ein Zahnrad, bei der gezeigten Ausführungsform sind dies die erste Welle 52 und das Zahnrad 90, sind mit dem Antriebsmotor 22 verbunden. Dies führt zu einer gegenläufigen Drehung der ersten und der zweiten Welle 52 bzw. 56. An ihren in Fig. 4 links eingezeichneten Abtriebsenden tragen die beiden Wellen 52 und 56 radiale Verschiebeelemente 94 und 96. Das radiale Verschiebeelement 94 trägt ein Lager 98. Das radiale Verschiebeelement 96 trägt eine Achse 100. Ein Zahnrad 102 läuft frei drehbar auf dem Lager 98. Ein Zahnrad 104 sitzt drehfest auf der Achse 100. Der Werkzeugträger 62 ist auf der Stirnseite des Zahnrades 102 befestigt.

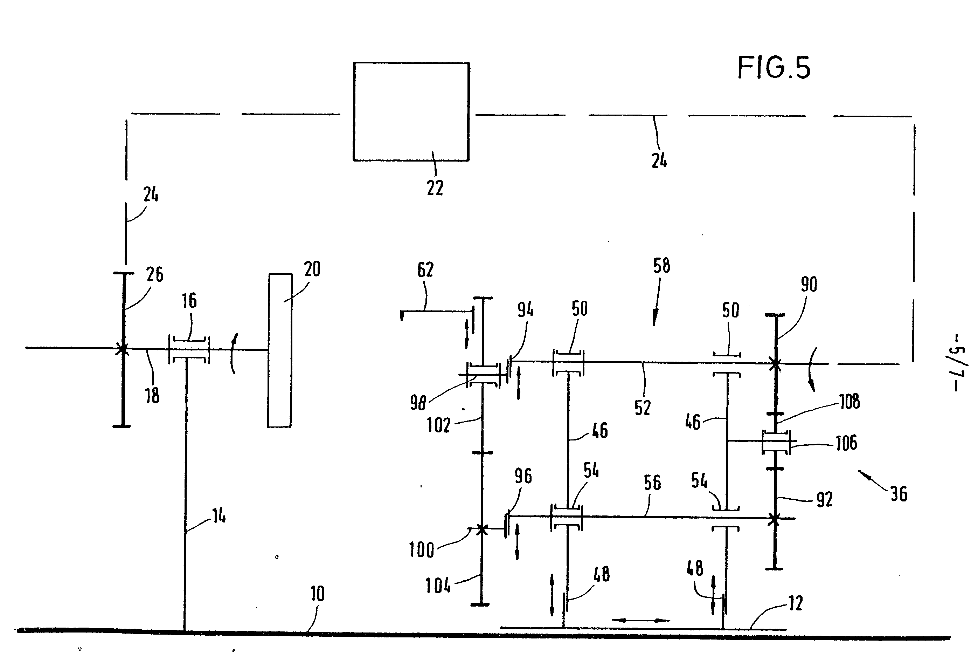

Die in Fig. 5 gezeigte Ausführungsform leitet sich aus der nach Fig. 4 ab. Der Unterschied liegt darin, dass das Wechselgetriebe 36 zusätzlich noch ein am Ständer 46 befestigtes Lager 106 aufweist, auf dem ein Zahnrad 108 frei drehbar gelagert ist. Dieses Zahnrad bewirkt, dass das Zahnrad 92 in der gleichen Richtung wie das Zahnrad 90 umläuft. Diese Gleichsinnigkeit der Drehrichtung überträgt sich selbstverständlich auf das Lager 98 und das Zahnrad 104.

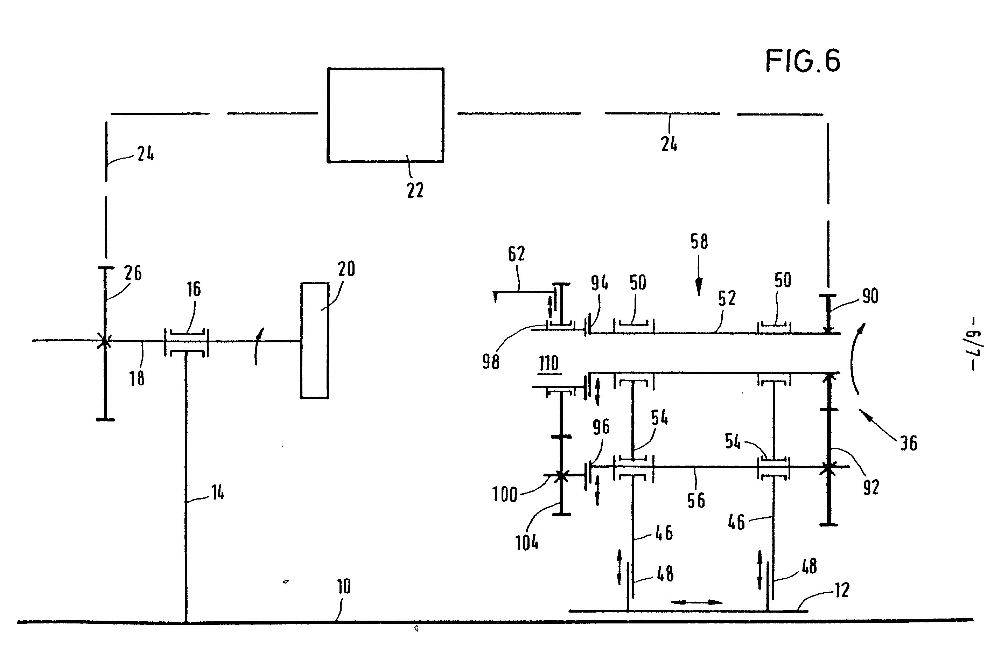

Die in Fig. 6 gezeigte Ausführungsform leitet sich aus der nach Fig. 4 ab. Der Unterschied liegt darin, dass die erste Welle 52 hohl ausgebildet ist und das auf ihr Abtriebsende aufgesetzte Lager 98 eine grosse Mittelöffnung 110 aufweist. Diese Mittelöffnung 110 ist so gross, dass sich trotz der radialen Versetzung infolge des radialen Verschiebeelementes 94 eine durchgehende Öffnung mit konstantem Durchmesser ergibt. Damit können lange Werkstücke, deren eines Ende im Spannfutter 20 gehalten ist, durch das Lager 98 und die erste Welle 52 durchgeführt werden.

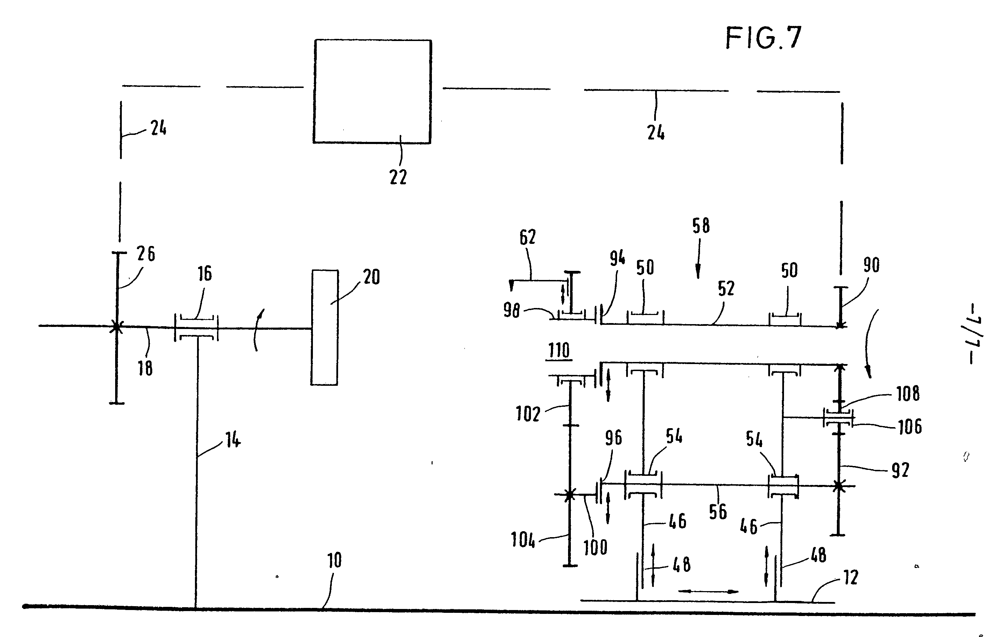

Die in Fig. 7 gezeigte Ausführungsform fasst Merkmale der Ausführungsformen nach den Figuren 5 und 6 zusammen. Die Welle 52 ist hohl ausgebildet, und das Lager 98 weist eine grosse Mittelöffnung 110 auf. Weiter sind die beiden Zahnräder 90 und 92 am Antriebsende der beiden Wellen 52 und 56 über ein Zahnrad 108 miteinander verbunden. Dieses Zahnrad 108 führt wieder zur gleichen Drehrichtung der beiden Wellen 52 und 56.

Nach dieser Einzelbeschreibung soll ein Betriebsablauf am Beispiel der in Fig. 1 gezeigten Ausführungsform beschrieben werden. Das Werkstück wird in das Spannfutter 20 eingespannt. Das Werkzeug wird am Werkzeugträger 62 befestigt. Im allgemeinen wird es sich um einen Drehmeissel handeln. Ebenso kann aber auch ein rotierender Schleifkörper verwendet werden. Die verschiedenen Drehzahlen und Drehrichtungen, die Exzentrizitäten, die Vertikal- und Horizontallagen werden nun entsprechend der gewünschten Polygonform eingestellt. Grundsätzlich ist davon auszugehen, dass sich das Werkstück und das Werkzeug in gleicher Drehrichtung, jedoch mit unterschiedlicher Drehzahl bzw. Geschwindigkeit bewegen. Die Geschwindigkeit des Werkzeuges liegt über der des Werkstückes. Dabei wird das Werkzeug auf einer Kreisbahn oder einer von einer Kreisbahn abweichenden Bahnkurve exzentrisch zu der das Spannfutter 20 haltenden Spindel 18 bewegt. Die Form dieser Bahnkurve hängt von der Drehrichtung und Drehzahl des Gehäuses 60 und dessen Exzentrizität bzw. radialer Verschiebung gegenüber der es tragenden ersten Welle 52 ab. Bestimmend sind weiter die Drehzahl und Drehrichtung der den Werkzeugträger 62 haltenden Scheibe 66. Bei einer Drehung des Gehäuses 60 und der Scheibe 66 in gleicher Richtung, jedoch bei doppelter Drehzahl des Gehäuses 60 und bei ausreichender radialer Verschiebung des Gehäuses 60 gegenüber der ersten Welle 52 lassen sich unter anderem Werkstücke mit geraden Seitenflanken und scharfkantigen Ecken erzeugen. Die von dem Werkzeug durchlaufende Bahnkurve ist hierbei eine Pascal'sche Kurve. Die Drehzahlen und die Drehrichtungen werden mit dem Übersetzungsverhältnis der in dem Getriebe 36 enthaltenen Zahnräder 38, 40 und 42, 44 und durch die Drehrichtung der Welle 34 bestimmt. Die Drehrichtung der Welle 34 lässt sich mit einer Drehrichtungsumkehr im Getriebezug 24 verändern. Die Zahl der Ecken des erzeugten Polygons ergibt sich aus der Drehzahldifferenz zwischen Werkstück und Werkzeug. Die Drehzahl des Werkstükkes kann noch mit dem Getriebe 26 beeinflusst werden. Zum Herstellen eines Sechseckes muss die Drehzahl des Werkzeuges das 1,2-fache der Drehzahl des Werkstückes betragen.

Die Exzentrizität der gesamten Lagerung 58 und damit der Bahnkurve des Werkzeuges gegenüber dem Werkstück wird mit der Vertikalführung 48 eingestellt. Bei Blick auf Fig. 1 können die beiden Ständer 46 nach oben oder unten verschoben werden. Ebenso liessen sie sich auch senkrecht zur Zeichenebene verschieben. Mit der sich hieraus ergebenden Änderung der Grösse der Exzentrizität wird die Form des Polygons beeinflusst. Durch radiales Verschieben des Gehäuses 60 gegenüber der ersten Welle 52 lässt sich dieser ersten noch eine zweite Exzentrizität überlagern. Diese Exzentrizitäten können miteinander verschiedene Winkel einschliessen. Sie können sich addieren oder einander entgegenwirken. Sie können auch zu einem asymmetrischen Verlauf der Seitenflanken des erzeugten Polygons führen. Wie ausgeführt, liegt die Geschwindigkeit des Werkzeuges immer über der des Werkstückes. In der Praxis bedeutet dies, dass sich ein Punkt an der Oberfläche des Werkstückes bei einer vollen Umdrehung des Werkzeuges nur um die Strecke von einer Ecke zur nächsten bewegt.

Die verschiedenen Ausführungsformen werden nach zwei willkürlich mit A und B bezeichneten Betriebsarten betrieben. Die Betriebsart A lässt sich bei den Ausführungsformen nach den Figuren 1, 2, 4 und 6 verwirklichen. Die Betriebsart B lässt sich bei den Ausführungsformen nach den Figuren 1, 3, 5 und 7 verwirklichen.

Bei der Betriebsart A liegt die Drehzahl des Gehäuses 60, das dem Werkzeugträger 62 die exzentrische Bewegung aufzwingt, beim Zweifachen von dessen Drehzahl. Die Drehrichtung von Gehäuse 60 und Werkzeugträger 62 sind jedoch gleich. Die von dem Werkzeugträger 62 durchlaufene Bahnkurve ist ein Kreis oder eine Pascal'sche Kurve. Die Form der Bahnkurve wird durch radiales Verschieben des Gehäuses 60 gegenüber der ersten Welle 52 bestimmt. Mit einer Verschiebung der gesamten Halterung 58 in der Vertikalführung 48 wird die Vorrichtung dagegen auf die Grösse des Werkstückes eingestellt. Wie ausgeführt, wirken sich drei Parameter aus und müssen aufeinander abgestimmt werden. Der eine dieser drei Parameter ist die Verschiebung der Ständer 46 in der Vertikalführung 48. Wie ausgeführt könnten die Ständer 46 auch senkrecht zur Zeichenebene verschoben werden. Der zweite Parameter ist die radiale Verschiebung des Gehäuses 60 gegenüber der ersten Welle 52. Der dritte Parameter ist die radiale Verschiebung des Werkzeugträgers 62 auf der Scheibe 66. Bei der Betriebsart A lassen sich Polygone mit geraden Seitenflanken und scharfen Ecken erzielen. Auch andere Formen sind möglich. Auch bei der Ausführungsform nach Fig. 2 sind die Drehrichtungen von Gehäuse 60 und Werkzeugträger 62 gleich. Eine hohe Drehzahl der ersten Welle 52 und damit des Gehäuses 60 lässt sich durch passende Auswahl der Zahnräder 38 und 40 erzielen. Auch bei der Ausführungsform nach Fig. 4 dreht sich das Lager 98, das nun dem Werkzeugträger 62 eine exzentrische Bewegung aufzwingt, in der gleichen Richtung wie dieser. Durch passende Wahl der Zahnräder 90 und 92 auf der einen und der Zahnräder 104 und 102 auf der anderen Seite lässt sich erreichen, dass die Drehzahl des Zahnrades 102 bei der Hälfte der Drehzahl der Welle 32 liegt. Die Ausführungsform nach Fig. 6 entspricht der nach Fig. 4 hinsichtlich Drehzahl und Drehrichtung. Damit drehen sich auch hier die erste Welle 52 und das Zahnrad 102 in der gleichen Richtung und im Drehzahlverhältnis 2:1.

Bei der Betriebsart B drehen sich bei Verwendung der Ausführungsform nach Fig. 1 das Gehäuse 60 und der Werkzeugträger 62 mit gleicher Drehzahl. Die Drehrichtungen sind bei Betriebsart B jedoch entgegengesetzt. Hierzu werden die Zahnräder 38 und 40 bzw. die Zahnräder 42 und 44 gegen solche anderer Grösse ausgewechselt und die Drehrichtung der Welle 34 umgekehrt. Dies letztere kann im Getriebezug 24 erfolgen. Dann ergeben sich für das Gehäuse 60 und für die Scheibe 66 und damit den Werkzeugträger 62 gleiche Drehzahlen, aber entgegengesetzte Drehrichtung. Die von dem Werkzeugträger 62 durchlaufene Bahnkurve is eine Ellipse oder ein Kreis. Mit dieser Betriebsart B lässt sich eine grosse Formenvielfalt von Polygonen herstellen. Polygone mit geraden Seitenflanken und scharfen Ecken lassen sich jedoch nicht erzielen. Bei der Ausführungsform nach Fig. 3 wird die Drehrichtung der zweiten Welle 56 durch Verwendung des zusätzlichen Zahnrades 86 gegenüber der Drehrichtung der ersten Welle 52 umgekehrt. Damit drehen sich auch das Gehäuse 60 und die Scheibe 66 mit dem Werkzeugträger 62 entgegengesetzt zueinander. Wie ein Blick auf Fig. 5 zeigt, laufen bei der dort gezeigten Ausführungsform die erste und die zweite Welle 52 bzw. 56 mit gleicher Drehzahl in entgegengesetzter Richtung. Dies heisst, dass sich das Lager 98, das dem Werkzeugträger 62 die Bahnkurve aufzwingt, mit gleicher Drehzahl, jedoch entgegengesetzt zu diesem umläuft. Gleiches gilt für die Ausführungsform nach Fig. 7.

## Patentansprüche

1. Vorrichtung zum Herstellen von Werkstücken mit polygoner Aussen- und/oder Innenform mit einem Maschinenbett (10), mit einer Spindel (18) mit einem Spannfutter (20) für das Werkstück, mit einem gegenüber dem Maschinenbett (10) längs- und querverschiebbar geführten Halter (60) für den Werkzeugträger (62), mit einer ersten und einer zweiten Welle (52 bzw. 56), die über ein Wechselgetriebe (30) gemeinsam und damit synchronisiert an den gleichen Antriebsmotor (22) wie die Spindel (18) angeschlossen sind, wobei der Halter (60) über ein fest einstellbares radiales Verschiebeelement mit der ersten Welle (52) verbunden und der Werkzeugträger (62) exzentrisch am Halter (60) befestigt und über ein radiales Verschiebeelement (78) antriebsmässig mit der zweiten Welle (56) verbunden ist, dadurch gekennzeichnet, dass die beiden Wellen (52, 56) parallel zueinander bis zum Halter (60) geführt sind und diesen halten und im Halter (60) eine Lagerung für den Werkzeugträger (62) untergebracht ist.

2. Vorrichtung nach Anspruch 1, dadurch gekennzeichnet, dass der Halter (60) als Gehäuse ausgebildet, radial verschiebbar an der ersten Welle (52) befestigt und in ihm eine Scheibe (66) drehbar gelagert ist, der Werkzeugträger (62) exzentrisch an der Scheibe (66) angeordnet und diese über das radiale Verschiebeelement (78) antriebsmässig mit der zweiten Welle (56) verbunden ist.

3. Vorrichtung nach Anspruch 2, dadurch gekennzeichnet, dass in dem als Gehäuse ausgebildeten Halter (60) ein Zahnradgetriebe (68) gelagert und dieses auf seiner Antriebsseite mit der zweiten Welle (56) und auf seiner Antriebsseite mit der Scheibe (66) verbunden ist.

4. Vorrichtung nach einem der Ansprüche 2 und 3, dadurch gekennzeichnet, dass die Scheibe (66) ein Hohlrad ist, das auf seiner Innenwand mit der Antriebsseite des Zahnradgetriebes (68) kämmt.

5. Vorrichtung nach einem der Ansprüche 2 bis 4, dadurch gekennzeichnet, dass die erste Welle (52) eine Hohlwelle ist und die zweite Welle (56) in dieser gelagert ist, das der als Gehäus ausgebildete Halter (60) in seiner an der ersten Welle (52) befestigten Seite zentrisch eine Öffnung aufweist, von der Antriebsseite des Zahnradgetriebes (68) ausgehend eine Welle (76) durch diese Öffnung durchgeführt und über das radiale Verschiebeelement (78) mit der zweiten Welle (56) verbunden ist.

6. Vorrichtung nach einem der Ansprüche 2 bis 5, dadurch gekennzeichnet, dass das Zahnradgetriebe (68) zwei auswechselbare Zahnräder (70, 72) enthält.

7. Vorrichtung nach einem der Ansprüche 1 bis 6, dadurch gekennzeichnet, dass das an den Antriebsmotor (22) angeschlossene Wechselgetriebe (36) zum Antrieb der ersten und der zweiten Welle (52, 56) für beide Wellen (52, 56) zum Ändern von deren Drehzahlen auswechselbare Zahnräder (38, 40; 42, 44) enthält.

8. Vorrichtung nach einem der Ansprüche 2 bis 6, dadurch gekennzeichnet, dass die zweite Welle (56) vom Antrieb gelöst und mit einem Festhalter (80) an einem Support fixiert ist und das Zahnradgetriebe (68) auf seiner Abtriebsseite zwei miteinander kämmende und auf Achsen (74, 84) exzentrisch an der Innenwand des als Gehäuse ausgebildeten Halters (60) gelagerte Zahnräder (70, 82) aufweist.

9. Vorrichtung nach einem der Ansprüche 2 bis 6, dadurch gekennzeichnet, dass die zweite Welle (56) über ein Getriebe (42, 44, 86) mit Drehzahlerhöhung und ohne Umkehr der Drehrichtung an den Antriebsmotor (22) angeschlossen ist und das Zahnradgetriebe (68) auf seiner Abtriebsseite zwei miteinander kämmende und auf Achsen (74, 84) exzentrisch an der Innenwand des als Gehäuse ausgebildeten Halters (60) gelagerte Zahnräder (70, 82) aufweist.

10. Vorrichtung nach Anspruch 9, dadurch gekennzeichnet, dass die erste Welle (52) über ein Getriebe (38, 40) und mit Umkehr der Drehrichtung an den Antriebsmotor (22) angeschlossen ist.

11. Vorrichtung nach einem der Ansprüche 1 bis 4, dadurch gekennzeichnet, dass die erste Welle (52) und die zweite Welle (56) nebeneinander gelagert sind, an der ersten Welle (52) über ein fest einstellbares radiales Verschiebeelement (94) ein Lager (98) befestigt, an diesem ein erstes Zahnrad (102) drehbar gelagert und an diesem der Werkzeugträger (62) exzentrisch zu dem Lager (98) befestigt und an der zweiten Welle (56) über ein fest einstellbares radiales Verschiebeelement (96) ein weiteres Zahnrad (104) befestigt ist, das mit dem ersten Zahnrad (102) kämmt.

12. Vorrichtung nach Anspruch 11, dadurch gekennzeichnet, dass die erste Welle (52) und die zweite Welle (56) an ihrer Antriebsseite zwei miteinander kämmende Zahnräder (90, 92) tragen und eines dieser Zahnräder an den Antriebsmotor (22) angeschlossen ist.

13. Vorrichtung nach Anspruch 12, dadurch gekennzeichnet, dass die beiden Zahnräder (90, 92) über ein weiteres Zahnrad (108) miteinander kämmen.

14. Vorrichtung nach Anspruch 12 und 13, dadurch gekennzeichnet, dass die erste Welle (52) eine Hohlwelle ist und das an dieser befestigte Lager (98) eine Mittelöffnung (110) aufweist, deren lichter Durchmesser dem Innendurchmesser der Hohlwelle entspricht.

15. Vorrichtung nach einem der Ansprüche 1 bis 12, dadurch gekennzeichnet, dass die beiden Zahnräder (90, 92) über ein weiteres Zahnrad (108 miteinander kämmen, die erste Welle (52) eine Hohlwelle ist und das an dieser befestigte Lager (98) eine Mittelöffnung (110) aufweist, deren lichter Durchmesser dem Innendurchmesser der Hohlwelle entspricht.

## Revendications

1. Installation pour la fabrication de pièces à usiner de forme extérieur et/ou intérieure polygonale comprenant un banc de machine (10), une broche (18) avec un mandrin de serrage (20) pour la pièce à usiner, un support (60) pour le porte-outil (62) guidé longitudinalement et transversalement par rapport au banc de machine (10), un premier et un second arbre (52, 56) qui, par l'intermédiaire d'un mécanisme de changement de vitesse (30), sont accouplés ensemble et ainsi de manière synchrone au même moteur d'entraînement (22) que la broche (18), le support (60) étant relié au premier arbre (52) par l'intermédiaire d'un élément coulissant radial, réglable de manière fixe, et le porte-outil (62) étant fixé de manière excentrique sur le support (60) et étant relié par l'intermédiaire d'un élément coulissant radial (78), dans des conditions d'entraînement, au second arbre (56), caractérisée en ce que les deux arbres (52, 56) sont guidés parallèlement l'un à l'autre jusqu'au support (60) et le maintiennent et, dans le support (60), est installé un palier pour le porte-outil (62).

2. Installation suivant la revendication 1, caractérisée en ce que le support (60), ayant la forme d'un carter, est fixé d'une manière radialement mobile sur le premier arbre (52) et contient un plateau (66) monté à rotation, le porte-outil (62) étant monté excentriquement sur le plateau (66) et ce dernier étant relié au deuxième arbre (56) dans des conditions d'entraînement par l'intermédiaire de l'élément coulissant radial (78).

3. Installation suivant la revendication 2, caractérisée en ce que, dans le support (60) en forme de carter, est installé un engrenage (68) qui est relié, du côté menant, au deuxième arbre (56) et du côté mené, au plateau (66).

4. Installation suivant l'une des revendications 2 et 3, caractérisée en ce que le plateau (66) est une roue à denture intérieure dont la paroi intérieure est en prise avec le côté mené de l'engrenage (68).

5. Installation suivant l'une des revendications 2 à 4, caractérisée en ce que le premier arbre (52) est un arbre creux et le second arbre (56) tourillonne dans le premier, le support (60) en forme de carter présente une ouverture au centre de son côté fixé au premier arbre (52), un arbre (76) partant du côté d'entraînement de l'engrenage (68) traversant cette ouverture et étant relié par l'intermédiaire de l'élément coulissant radial (78) au second arbre (56).

6. Installation suivant l'une des revendications 2 à 5, caractérisée en ce que l'engrenage (68) comprend deux roues dentées échangeables (70, 72).

7. Installation suivant l'une des revendications 1 à 6, caractérisée en ce que le mécanisme de changement de vitesse (36) accouplé au moteur d'entraînement (22) pour entraîner le premier et le second arbre (52, 56), comprend des roues dentées (38, 40; 42, 44) pour les deux arbres (52, 56) qui sont échangeables pour modifier leurs vitesses de rotation.

8. Installation suivant l'une des revendications 2 à 6, caractérisée en ce que le second arbre (56) n'est pas relié à l'entraînement et est fixé par un dispositif d'immobilisation (80) à un support et l'engrenage (68) comporte, du côté mené, deux roues dentées (70, 82) qui s'engrènent mutuellement et qui sont montées à rotation sur des axes (74, 84) excentriquement sur la paroi interne du support (60) en forme de carter.

9. Installation suivant l'une des revendications 2 à 6, caractérisée en ce que le second arbre (56) est accouplé par l'intermédiaire d'un engrenage (42, 44, 86) à augmentation de vitesse et sans inversion du sens de rotation au moteur d'entraînement (22) et l'engrenage (68) comporte, du côté mené, deux roues dentées (70, 82) qui s'engrènent et qui sont montées à rotation sur des axes (74, 84) excentriquement sur la paroi interne du support (60) en forme de carter.

10. Installation suivant la revendication 9, caractérisée en ce que le premier arbre (52) est accouplé, par l'intermédiaire d'un engrenage (38, 40) et avec inversion du sens de rotation, au moteur d'entraînement (22).

11. Installation suivant les revendications 1 à 4, caractérisée en ce que le premier arbre (52) et le second arbre (56) sont montés l'un à côté de l'autre, un palier (98) est fixé au premier arbre (52) par l'intermédiaire d'un élément coulissant radial (94) réglable de manière fixe, une première roue dentée (102) est montée à rotation sur ce palier et le porte-outil (62) est fixé à cette roue dentée excentriquement par rapport au palier (98), tandis qu'une autre roue dentée (104) est fixée sur le second arbre (56) par l'intermédiaire d'un élément coulissant radial (96) réglable de manière fixe, la roue dentée (104) étant en prise avec la première roue dentée (102).

12. Installation suivant la revendication 11, caractérisée en ce que le premier arbre (52) et le second arbre (56) portent, sur leurs côtés menants, deux roues dentées (90, 92) qui sont engrenées et une de ces roues dentées est accouplée au moteur d'entraînement (22).

13. Installation suivant la revendication 12, caractérisée en ce que les deux roues dentées (90, 92) s'engrènent par l'intermédiaire d'une autre roue dentée (108).

14. Installation suivant les revendications 12 et 13, caractérisée en ce que le premier arbre (52) est un arbre creux et le palier (98) fixé à cet arbre présente une ouverture centrale (110) dont le diamètre interne correspond au diamètre intérieur de l'arbre creux.

15. Installation suivant l'une quelconque des revendications 1 à 12, caractérisée en ce que les deux roues dentées (90, 92) s'engrènent par l'intermédiaire d'une autre roue dentée (108), le premier arbre (52) est un arbre creux et le palier (98) fixé à cet arbre creux présente une ouverture centrale (110) dont le diamètre interne correspond au diamètre intérieur de l'arbre creux.

**Claims**

1. Apparatus for producing workpieces with a polygonal external and/or internal shape comprising a machine bed (10), a spindle (18) with a clamping chuck (20) for the workpiece, a holder (60) for the tool carrier (62), the holder being guided longitudinally and transversely displaceably relative to the machine bed (10), first and second shafts (52 and 56) which, by way of a change-speed transmission (30), are connected jointly and thus synchronisedly to the same drive motor (22) as the spindle (18), wherein the holder (60) is connected to the first shaft (52) by way of a fixedly adjustable radial displacement element and the tool carrier (62) is secured eccentrically to the holder (60) and is drivingly connected to the second shaft (56) by way of a radial displacement element (78) characterised in that the two shafts (52, 56) are taken parallel to each other to the holder (60) and hold same and disposed in the holder (60) is a mounting means for the tool carrier (62).

2. Apparatus according to claim 1 characterised in that the holder (60) is in the form of a housing and is radially displaceably secured to the first shaft (52) and rotatably mounted in the holder is a disc (66), the tool carrier (62) is arranged eccentrically on the disc (66) and the disc is drivingly connected to the second shaft (56) by way of the radial displacement element (78).

3. Apparatus according to claim 2 characterised in that a gear transmission (68) is mounted in the holder (60) which is in the form of a housing and the gear transmission (68) is connected on its drive side to the second shaft (56) and on its output side to the disc (66).

4. Apparatus according to one of claims 2 and 3 characterised in that the disc (66) is an annular gear which meshes on its inside surface with the output side of the gear transmission (68).

5. Apparatus according to one of claims 2 to 4 characterised in that the first shaft (52) is a hollow shaft and the second shaft (56) is mounted therein, the holder (60) which is formed as a housing is provided centrally with an opening in its side which is secured to the first shaft (52), a shaft (76) is passed through said opening, starting from the drive side of the gear transmission (68) and the shaft is connected to the second shaft (56) by way of the radial displacement element (78).

6. Apparatus according to one of claims 2 to 5 characterised in that the gear transmission (68) has two interchangeable gears (70, 72).

7. Apparatus according to one of claims 1 to 6 characterised in that the change-speed transmission (36) which is connected to the drive motor (22) for driving the first and second shafts (52, 56) includes for both shafts (52, 56) gears (38, 40; 42, 44) which are interchangeable for varying the rotary speeds of the shafts.

8. Apparatus according to one of claims 2 to 6 characterised in that the second shaft (56) is released from the drive and is fixed with a retaining means (80) to a support and the gear transmission (68) is provided on its output side with two intermeshing gears (70, 82) which are mounted on shafts (74, 84) eccentrically on the inside wall of the holder (60) which is in the form of a housing.

9. Apparatus according to one of claims 2 to 6 characterised in that the second shaft (56) is connected to the drive motor (22) by way of a transmission (42, 44, 86) with an increase in speed of rotation and without reversing the direction of rotation and the gear transmission (68) on its output side has two mutually meshing gears (70, 82) which are mounted on shafts (74, 84) eccentrically on the inside wall of the holder (60) which is in the form of a housing.

10. Apparatus according to claim 9 characterised in that the first shaft (52) is connected to the drive motor (22) by way of a transmission (38, 40) and with reversal of the direction of rotation.

11. Apparatus according to one of claims 1 to 4 characterised in that the first shaft (52) and the second shaft (56) are mounted side-by-side, a bearing (98) is secured to the first shaft (52) by way of a fixedly adjustable radial displacement element (94), a first gear (102) is mounted rotatably on the bearing (98) and the tool carrier (62) is secured to the first gear (102) eccentrically relative to the bearing (98), and a further gear (104) which meshes with the first gear (102) is secured to the second shaft (56) by way of a fixedly adjustable radial displacement element (96).

12. Apparatus according to claim 11 characterised in that the first shaft (52) and the second shaft (56) carry two mutually meshing gears (90, 92) at their drive side and one of said gears is connected to the drive motor (22).

13. Apparatus according to claim 12 characterised in that the two gears (90, 92) mesh with each other by way of a further gear (108).

14. Apparatus according to claim 12 and claim 13 characterised in that the first shaft (52) is a hollow shaft and the bearing (98) secured thereto has a central opening (110) whose inside diameter corresponds to the inside diameter of the hollow shaft.

15. Apparatus according to one of claims 1 to 12 characterised in that the two gears (90, 92) mesh with each other by way of a further gear (108), the first shaft (52) is a hollow shaft and the bearing (98) secured thereto has a central opening (110) whose inside diameter corresponds to the inside diameter of the hollow shaft.

FIG.1

FIG.2

FIG.3

EP 0 183 737 B1

—3/7—

FIG.4

-5/7-

# FIG.5

FIG.6

EP 0 183 737 B1

-6/7-

FIG.7